Europäisches Patentamt

European Patent Office

Office européen des brevets

(11) Veröffentlichungsnummer : **0 047 809**
**B1**

(12) **EUROPÄISCHE PATENTSCHRIFT**

(45) Veröffentlichungstag der Patentschrift :
**09.03.83**

(51) Int. Cl.³ : **F 04 B 33/00**, F 16 K 15/14

(21) Anmeldenummer : **81103562.5**

(22) Anmeldetag : **09.05.81**

(54) **Kopf einer Luftpumpe zum Aufpumpen von Luftreifen mit einem Kraftradventil.**

(30) Priorität : **17.09.80 DE 3035036**

(43) Veröffentlichungstag der Anmeldung :
**24.03.82 Patentblatt 82/12**

(45) Bekanntmachung des Hinweises auf die Patenterteilung : **09.03.83 Patentblatt 83/10**

(84) Benannte Vertragsstaaten :
**FR GB IT**

(56) Entgegenhaltungen :
**DE B 1 154 982**
**DE C 956 382**
**GB A 662 119**

(73) Patentinhaber : **Scheffer-Klute GmbH & Co**

**D-5768 Sundern (Sauerland) (DE)**

(72) Erfinder : **Scheffer, Walter**
**Kaiserhöhe 11**
**D-5768 Sundern (Sauerland) (DE)**

(74) Vertreter : **Fritz, Herbert, Dipl.-Ing.**
**Mühlenberg 74**
**D-5760 Arnsberg 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

« Kopf einer Luftpumpe zum Aufpumpen von Luftreifen mit einem Kraftradventil »

Die Erfindung bezieht sich auf einen Kopf einer Luftpumpe zum Aufpumpen von Luftreifen mit einem Kraftradventil, wobei der Kopf einen mit dem Pumpen-Kolbenraum verbundenen Druckraum und einen angeformten, mit einem Hohlraum auf das Kraftradventil aufsetzbaren (aufsteckbaren) Ansatz besitzt und dabei der Ansatz-Hohlraum durch mindestens einen Luftkanal mit dem Druckraum verbunden ist sowie ein Rückschlagventil aufnimmt.

Kraftradventile, die als sogenannte Schraderventile seit längerer Zeit bekannt und auf dem Markt sind, wurden überwiegend nur bei Autos, Motorrädern und Mofas eingesetzt. Diese Kraftradventile finden jedoch neuerdings auch großen Anklang bei Luftreifen an Fahrrädern. Um diese Kraftradventile betätigen zu können, sind jedoch in nachteiliger Weise Luftpumpen erforderlich, die mit einem Kugel- oder Stopfen-Rückschlagventil ausgerüstet sind, was besondere Herstellungen erfordert und den Preis dieser Luftpumpe ungünstig beeinflußt.

Deshalb ist es Aufgabe der Erfindung, eine Luftpumpe mit einem Kopf auszustatten, der in einfacher, in der Herstellung preislich günstiger und wirkungsmäßig sicherer Weise ein Aufpumpen von Luftreifen gestattet, die mit dem bekannten Kraftradventil (Schraderventil) ausgerüstet sind.

Diese Aufgabe wird erfindungsgemäß dadurch gelöst, daß das im Ansatz-Hohlraum liegende Rückschlagventil von einer um einen in den Ansatz-Hohlraum hineinragenden Lüfterstift angeordneten, zwischen sich und dem Lüfterstift einen Verbindungskanal freilassenden Dichtung gebildet ist, die beim Lüften des federbelasteten Rückschlagventils des vom Ansatz aufgenommenen Kraftradventilkörpers durch den Lüfterstift mit ihrer freien Stirnfläche eine am Kraftrad-Ventilkörper stirnseitig anliegende Dichtfläche bildet und mit einer verbindungskanalseitigen Dichtlippe unter Absperrung des Luftkanals zum Druckraum hin an dem Lüfterstift anliegt.

Vorteilhafte Weiterbildungen der Merkmale des Anspruches 1 sind aus den einzelnen abhängigen Ansprüchen zu entnehmen ; der Gegenstand der vorliegenden Erfindung bezieht sich nicht nur auf die Merkmale der einzelnen Ansprüche, sondern auch auf deren Kombination.

Der Luftpumpenkopf mit seiner erfindungsgemäßen Dichtung ermöglicht in einfacher und sicherer Weise das Aufpumpen von Kraftradventilen (Schraderventilen) — hierfür ist der Luftpumpenkopf mit einer einfach aufgebauten, preislich günstig herstellbaren und sicher sowie dauerhaft wirksamen Dichtung ausgestattet worden, die als Rückschlagventil wirkt und die herkömmlichen, technisch aufwendigen und kostspieligen Kugel- und Stopfen-Rückschlagventile ersetzt.

Diese Ringdichtung mit Dichtfläche für das Kraftradventil und Dichtlippe zum Absperren der Luftkanäle im Pumpenkopf ist einteilig aus Gummi oder Kunststoff preislich günstig herstellbar und hat einen hohen Gebrauchswert. Ein einziges Dichtteil in besonderer Formgebung und mit besonderer Wirkungsweise hat erfindungsgemäß die bisher bekannten, technisch komplizierten Dichtelemente ersetzt, was eine gesteigerte Wirkung ergibt.

Anhand der Zeichnung wird nachfolgend ein Ausführungsbeispiel gemäß der Erfindung näher erläutert. Dabei zeigt :

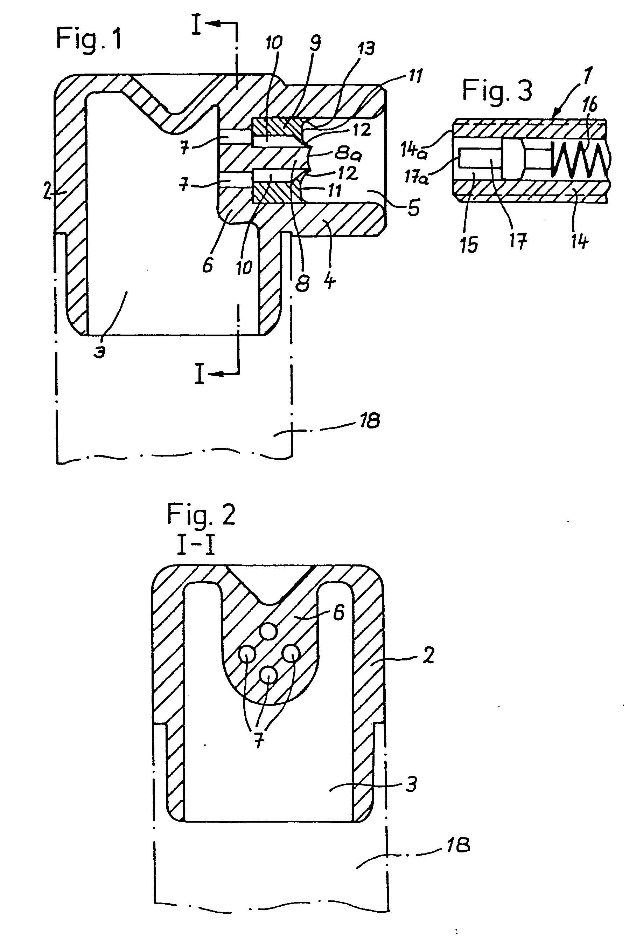

Figur 1 einen senkrechten Schnitt durch einen Kopf einer Luftpumpe zum Aufpumpen von Kraftradventilen mit der erfindungsgemäßen Dichtung,

Figur 2 einen senkrechten Schnitt durch denselben Kopf gemäß der Schnittlinie I-I in Fig. 1 und

Figur 3 einen Längsschnitt durch einen Teilbereich des Kraftradventiles.

Der erfindungsgemäße Kopf als Teil einer Luftpumpe 18 (im Teil strichpunktiert dargestellt) ist in seiner konstruktiven Ausführung derart gestaltet und ausgerüstet worden, daß er zum Aufpumpen von Luftreifen eingesetzt werden kann, die mit einem Kraftradventil 1, und zwar einem sogenannten Schraderventil, ausgestattet sind ; Schraderventile sind bekannt und seit langer Zeit an Luftreifen der verschiedensten Art angebracht.

Der Luftpumpenkopf besitzt ein topfartiges, an seiner mit dem Luftpumpengehäuse verbindbaren Stirnseite geöffnetes Gehäuse 2, welches einen mit dem Kolbenraum der Luftpumpe 18 in direkter Verbindung stehenden Druckraum 3 bildet.

An der Mantelfläche des Kopfgehäuses 2 ist ein rechtwinklig zur Topfachse abgehender Ansatz 4 angeformt, der mit seinem an der freien Stirnseite offenen Hohlraum 5 auf das Kraftradventil 1 aufsetzbar (aufsteckbar) ist. Es besteht natürlich auch die Möglichkeit, diesen Ansatz 4 in Topf-Längsachse verlaufend vorzusehen, d. h., daß sich der Ansatz 4 vom Topfboden und nicht von der Topf-Mantelfläche abhebt. Die beiden Hohlräume 3,4 des Pumpenkopfes werden durch eine Trenn-Wandung 6 gegeneinander abgetrennt und in dieser Trenn-Wandung 6 ist mindestens ein Luftkanal 7 vorgesehen, der beide Hohlräume 3,5 miteinander verbindet ; vorzugsweise erstreckt sich dieser Luftkanal 7 in Längsrichtung des Ansatzes 4, also rechtwinklig zur Topf-Längsachse des Kopfgehäuses 2.

Wie aus der Zeichnung bei dem Ausführungsbeispiel ersichtlich, sind in der Trennwandung 6 mehrere, vorzugsweise vier um die Ansatz-Längsachse im gleich großen Abstand zueinander und zu dieser Achse angeordnete Luftkanäle 7 vorgesehen.

Von der Trennwandung 6 hebt sich ein auf der Ansatz-Längsachse verlaufender, zylindrischer Lüfterstift 8 ab, der einen Teilbereich, etwa die halbe Länge der Ansatzlänge, einnimmt.

In dem Hohlraum 5 des Ansatzes 4 ist eine Dichtung 9 angeordnet, die an der umlaufenden Mantelfläche des Hohlraumes 5 anliegt und sich auf dem Hohlraumboden, nämlich der Trennwandung 6, abstützt und die zwischen sich und dem Lüfterstift 8 einen umlaufenden Verbindungskanal (Ringkanal) 10 freiläßt. Diese Dichtung 9 ist als Ringdichtung ausgebildet, hat eine zylindrische Formgebung und einen rechteckigen, mit der größeren Rechteckausdehnung in Längsrichtung des Ansatzes 4 verlaufenden Querschnitt ; der um den Lüfterstift 8 umlaufende ringförmige Verbindungskanal 10 besitzt einen entsprechenden rechteckigen Querschnitt, wobei im Bereich dieses Verbindungs-Ringkanales 10 alle Luftkanäle 7 mit ihrem gesamten Querschnitt oder aber nur mit einem Teilquerschnitt einmünden.

Die Ringdichtung 9 ist in bevorzugter Weise unter Press-Sitz in den Hohlraum 5 des Ansatzes 4 eingebracht und darin lagemäßig fixiert.

Die freie, der Trennwandung 6 abgewendete Stirnseite der Dichtung 9 bildet eine mit dem Kraftradventil 1 zusammenwirkende Dichtfläche 11.

Weiterhin besitzt die Dichtung 9 verbindungskanalseitig eine umlaufende, an dem Lüfterstift 8 anliegende Dichtlippe 12, die im Bereich der Dichtfläche 11 an der Dichtung 9 vorgesehen (angeformt) ist.

Auch kann die Dichtung 9 dichtflächenseitig noch eine an der Mantelfläche des Ansatz-Hohlraumes 5 anliegende, umlaufende Dichtlippe 13 aufweisen.

Die Dichtung 9 in der zylindrischen Ringform ist aus einem elastischen Werkstoff, vorzugsweise aus Gummi oder Kunststoff hergestellt.

Die bekannten Kraftradventile 1 weisen einen Ventilkörper 14 mit axialem Luftkanal 15 auf, in dem ein unter der Einwirkung einer Druckfeder 16 stehendes Rückschlagventil 17 angeordnet ist, welches bei Lüften entgegen der Federkraft den Luftkanal 15 zum Durchströmen von Luft freigibt.

Derartige Ventile 1 sind bekannt und daher erübrigt sich ein näheres Eingehen auf ihren Gesamtaufbau und ihre Wirkungsweise.

Die Wirkungsweise des erfindungsgemäßen Pumpenkopfes ist folgende :

Der an der Pumpe 18 angeordnete Pumpenkopf wird mit seinem Ansatz 4 über den Ventilkörper 14 des Kraftradventiles 1 gesteckt, so daß sich der Ventilkörper 14 mit einem Teilbereich seiner Länge in dem Hohlraum 5 befindet. Hierbei wirkt bei Druckeinwirkung der Lüfterstift 8 mit seiner Stirnfläche 8a auf die Stirnfläche 17a des Rückschlagventiles 17 ein und dieses wird entgegen der Federkraft 16 gelüftet (zurückgedrückt). Gleichzeitig liegt die Dichtung 9 mit ihrer Dichtfläche 11 abgedichtet an der Stirnfläche 14a des Ventilkörpers 14 an und die umlaufende Dichtlippe 12 der Dichtung 9 liegt abdichtend an dem Lüfterstift 8 an, sodaß dadurch der Luftkanal 7 bzw. die Luftkanäle 7 zum Kopf-Druckraum 3 und somit zur Pumpe (dem Kolbenraum) hin abgesperrt sind.

Diese Dichtung 9 wirkt somit als Rückschlagventil, indem sie die Luft bei entsprechendem Druck aus der Pumpe 18 durch den Druckraum 3, den oder die Luftkanäle 7, den ringförmigen Verbindungskanal 10 und unter Wegdrücken der umlaufenden Dichtlippe 12 vom Lüfterstift 8 in den Ansatzhohlraum 5 und somit in das Ventil 1 hineinläßt.

Wird dieser Luftdruck geringer, so erfolgt sofort durch den Gegendruck das Anlegen der Dichtlippe 12 an den Lüfterstift 8 und somit das Versperren des oder der Luftkanäle 7 zum Druckraum 3 hin — dieses bildet eine Rückschlagsicherung in einfachster und sicherer Weise.

Beim Abnehmen der Luftpumpe 18 vom Ventil 1 erfolgt im Druckraum 3 keine Luftkomprimierung mehr und die umlaufende Dichtlippe 12 liegt aufgrund ihrer Elastizität ebenfalls an dem Lüfterstift 8 an. Gleichzeitig schließt sich das Ventil 1 aufgrund der Federbelastung.

Dieser Pumpenkopf eignet sich sowohl für manuell als auch für motorisch betriebene Luftpumpen.

## Ansprüche

1. Kopf einer Luftpumpe (18) zum Aufpumpen von Luftreifen mit einem Kraftradventil (1), der einen mit dem Pumpen-Kolbenraum verbundenen Druckraum (3) und einen angeformten, mit einem Hohlraum (5) auf das Kraftradventil (1) aufsetzbaren Ansatz (4) besitzt, wobei der Ansatz-Hohlraum (5) durch mindestens einen Luftkanal (7) mit dem Druckraum (3) verbunden ist und ein Rückschlagventil aufnimmt, dadurch gekennzeichnet, daß das im Ansatz-Hohlraum (5) liegende Rückschlagventil von einer um einen in den Ansatz-Hohlraum (5) hineinragenden Lüfterstift (8) angeordneten, zwischen sich und dem Lüfterstift (8) einen Verbindungskanal (10) freilassenden Dichtung (9) gebildet ist, die beim Lüften des federbelasteten Rückschlagventiles (17) des vom Ansatz (4) aufgenommenen Kraftradventilkörpers (14) durch den Lüfterstift (8) mit ihrer freien Stirnfläche eine am Kraftrad-Ventilkörper (14) stirnseitig anliegende Dichtfläche (11) bildet und mit einer verbindungskanalseitigen Dichtlippe (12) unter Absperrung des Luftkanales (7) zum Druckraum (3) hin an dem Lüfterstift (8) anliegt.

2. Luftpumpenkopf nach Anspruch 1, dadurch gekennzeichnet, daß die Dichtung (9) von einer Ringdichtung aus einem elastischen Material, wie Gummi oder Kunststoff, gebildet ist.

3. Luftpumpenkopf nach Anspruch 1 und 2, dadurch gekennzeichnet, daß die ringförmige Dichtung (9) im Ansatz-Hohlraum (5) eingepreßt gehalten ist und dabei mit ihrer umlaufenden Mantelfläche an dem Hohlraummantel anliegt und sich mit einer Stirnfläche auf dem von einer den oder die Luftkanäle (7) aufweisenden Trennwandung (6) gebildeten Hohlraumboden abstützt.

4. Luftpumpenkopf nach den Ansprüchen 1 bis 3, dadurch gekennzeichnet, daß die Dichtung (9) eine zylindrische Grundform aufweist und einen rechteckigen, mit der größeren Rechteckausdehnung in Längsrichtung des Ansatzes (4) verlaufenden Querschnitt hat.

5. Luftpumpenkopf nach den Ansprüchen 1 bis 4, dadurch gekennzeichnet, daß der zwischen Lüfterstift (8) und Dichtung (9) umlaufende Verbindungskanal (10) einen rechteckigen, mit der größeren Rechteckausdehnung in Ansatz-Längsrichtung verlaufenden Querschnitt besitzt und dabei der oder die Luftkanäle (7) mit ihrem gesamten Querschnitt oder mit einem Querschnitts-Teilbereich in den Verbindungskanal (10) einmünden.

6. Luftpumpenkopf nach den Ansprüchen 1 bis 5, dadurch gekennzeichnet, daß die am freien Stirnende der Dichtung (9) vorgesehene Dichtfläche (11) gegenüber der mit dem Rückschlagventil (17) wirksam werdenden Stirnfläche (8a) des Lüfterstiftes (8) angeordnet ist.

7. Luftpumpenkopf nach den Ansprüchen 1 bis 5, dadurch gekennzeichnet, daß die umlaufende Dichtlippe (12) an der dichtflächenseitigen Stirnseite (11) der Dichtung (9) angeformt ist und über den umlaufenden Verbindungskanal (10) in Richtung Lüfterstift (8) elastisch beweglich ist.

**Claims**

1. A head of an air pump (18) for inflating pneumatic tyres having a motorcycle valve (1), said head comprising a pressure space (3) connected to the pump piston space and an integrally formed projection (4) appliable with a cavity (5) upon the motorcycle valve (1), the cavity (5) of the projection being connected by at least one air duct (7) to the pressure space (3) and accommodating a check valve, characterised in that the check valve positioned in the cavity (5) of the projection is formed by a seal (9) arranged around a lifting pin (8) extending into the cavity (5) of the projection and leaving free between itself and the lifting pin (8) a connecting duct (10), said seal forming with its free end face a sealing surface (11) facially engaging the motor-cycle valve body (14) accommodated by the projection (4) by the lifting pin (8) and engaging with a sealing lip (12) at the connecting duct side the lifting pin (8) in shutting off the air duct (7) to the pressure space (3).

2. A head of an air pump according to claim 1, characterised in that the seal (9) is formed by an annular seal of a resilient material such as rubber or plastics.

3. A head of an air pump according to claims 1 and 2, characterised in that the annular seal (9) is retained pressed into the cavity (5) of the projection and engages with its circumferential surface the periphery of the cavity and is supported with one end face on the bottom of the cavity formed by a separating wall (6) provided with the air duct or ducts (7).

4. A head of an air pump according to claims 1 to 3, characterised in that the seal (9) has a cylindrical basic shape and has a rectangular cross section extending with the larger rectangle extent in longitudinal direction of the projection (4).

5. A head of an air pump according to claims 1 to 4, characterised in that the connecting duct (10) extending circumferentially between lifting pin (8) and seal (9) has a rectangular cross section extending with the larger rectangle extent in longitudinal direction of the projection and the air duct or ducts (7) opening with their entire cross section or with a partial region of the cross section thereof into the connecting duct (10).

6. A head of an air pump according to claims 1 to 5, characterised in that the sealing surface (11) provided at the free end face of the seal (9) is arranged opposite to the end face (8a) of the lifting pin (8) effective with the check valve (17).

7. A head of an air pump according to claims 1 to 5, characterised in that the circumferential sealing lip (12) is integrally formed to the end face (11) of the seal (9) at the sealing surface side and is resiliently movable across the circumferential connecting duct (10) in direction of the lifting pin (8).

**Revendications**

1. Tête d'un gonfleur (18) destiné au gonflage de bandages pneumatiques pourvus d'une valve (1) de motocyclette, comportant un compartiment à pression (3) relié au compartiment du piston du gonfleur, ainsi qu'un embout (4) solidaire pouvant être placé, par un compartiment creux (5), sur la valve de motocyclette (1), le compartiment creux (5) de l'embout étant relié par au moins un canal d'air (7) au compartiment à pression (3), tandis qu'il reçoit une soupape de retenue, caractérisée en ce que la soupape de retenue venant se loger dans le compartiment creux (5) de l'embout est formée par un joint d'étanchéité (9) disposé autour d'un pointeau de ventilation (8) pénétrant dans le compartiment creux (5) de l'embout, joint d'étanchéité qui libère, entre lui-même et ce pointeau de ventilation (8), un canal de jonction (10) et qui forme, lors de la ventilation de la soupape de retenue à ressort (17) du corps (14) de la valve de motocyclette venant se loger dans l'embout (4) par le pointeau (8), avec sa face frontale libre, une surface d'étanchéité (11) venant s'appliquer sur la face frontale du corps (14) de la valve de motocyclette, et qui s'applique sur le pointeau de ventilation (8) par une lèvre d'étanchéité (12) située du côté du canal de jonction, au cours du blocage du canal d'air (7) en direction du compartiment à pression (3).

2. Tête de gonfleur suivant la revendication 1, caractérisée en ce que le joint d'étanchéité (9) est formé par un joint annulaire en une matière élastique telle que le caoutchouc ou une matière synthétique.

3. Tête de gonfleur suivant les revendications 1 et 2, caractérisée en ce que le joint d'étanchéité annulaire (9) est maintenu pressé à l'intérieur du compartiment creux (5) de l'embout en venant s'appliquer ainsi, par sa surface périphérique, sur l'enveloppe du compartiment creux, tandis qu'il vient prendre appui, par une face frontale, sur le fond du compartiment creux qui est formé par une cloison (6) comportant le ou les canaux d'air (7).

4. Tête de gonfleur suivant les revendications 1 à 3, caractérisée en ce que le joint d'étanchéité (9) a une forme de base cylindrique et une section transversale rectangulaire dont la plus grande dimension s'étend dans le sens longitudinal de l'embout (4).

5. Tête de gonfleur suivant les revendications 1 à 4, caractérisée en ce que le canal de jonction (10) s'étendant entre le pointeau de ventilation (8) et le joint d'étanchéité (9) a une section transversale rectangulaire dont la plus grande dimension s'étend dans le sens longitudinal de l'embout, et que le ou les canaux d'air (7) débouche(nt) ainsi dans le canal de jonction (10) sur toute sa (ou leur) section transversale ou une partie de celle-ci.

6. Tête de gonfleur suivant les revendications 1 à 5, caractérisée en ce que la surface d'étanchéité (11) prévue à l'extrémité frontale libre du joint d'étanchéité (9) est disposée en face de la face frontale (8a) du pointeau de ventilation (8) qui agit avec la soupape de retenue (17).

7. Tête de gonfleur suivant les revendications 1 à 5, caractérisée en ce que la lèvre d'étanchéité périphérique (12) est formée sur la face frontale (11) du joint (9) qui est située du côté de la surface d'étanchéité, tandis qu'elle peut se déplacer élastiquement au-dessus du canal de jonction périphérique (10) en direction du pointeau de ventilation (8).

Fig. 1

Fig. 3

Fig. 2
I-I